# EUROPEAN PATENT APPLICATION

(11) **EP 2 634 502 A1**
(43) Date of publication of application: **04.09.2013**
(21) Application number: 11836248.2
(22) Date of filing: 25.10.2011
(51) Int. Cl.: F24J 2/04, F03G 6/00, F24J 2/24, F24J 2/46, F24J 2/48

(54) **THERMAL RECEIVER AND SOLAR THERMAL POWER GENERATION DEVICE**

(30) Priority: 25.10.2010 JP 2010239007
(71) Applicant: Ibiden Co., Ltd., Gifu 503-8604 (JP)
(72) Inventor: MAJIMA Kazutaka, Ibi-gun Gifu 501-0695 (JP); KATO Masataka, Ibi-gun Gifu 501-0695 (JP)
(74) Representative: HOFFMANN EITLE
(86) International application number: PCT/JP2011/074515
(87) International publication number: WO 2012/057115

(57) **Abstract**

Provided is a heat collection receiver that is used in a solar thermal power generation device. The heat collection receiver includes a heat absorption body that includes one or a plurality of honeycomb units in which a plurality of flow paths through which a heat medium passes are formed, and a support body which supports the heat absorption body and through which the heat medium flows. The honeycomb unit includes porous silicon carbide, and silicon that fills pores in the porous silicon carbide. In regard to a surface that is irradiated with solar light, a surface region in a predetermined depth from the surface is formed from a porous layer, and the porous layer are not filled with the silicon.

## Description

### Technical Field

The present invention relates to a heat collection receiver and a solar thermal power generation device.

### Background Art

Solar thermal power generation is known as a power generation method using the sun. In the solar thermal power generation, light that is emitted from the sun is condensed through a reflective mirror or the like, and a steam turbine is made to operate by using the obtained solar heat so as to generate electricity. In this solar thermal generation, a greenhouse effect gas such as carbon dioxide is not generated during the power generation, and heat may be accumulated, and thus the power generation is possible under a cloudy skies or at nighttime. Accordingly, the solar thermal power generation has attracted much attention as a promising power generation method in the future.

The solar thermal power generation type is largely divided into two kinds of a trough type and a tower type. The tower-type solar thermal power generation is a power generation type in which solar light is focused to a heat collection receiver of a tower provided at a central portion by using a plurality of planar mirrors called a heliostat so as to condense the light, and electricity is generated using heat of the condensed solar light. The heliostat is a planar mirror of several meter square. In the tower-type solar thermal power generation, the solar light, which is collected using several hundred sheets of heliostats or several thousand sheets of heliostats, may be focused to one place. Therefore, the heat collection receiver may be heated to approximately 1,000°C, and the tower-type solar thermal power generation has a characteristic in which thermal efficiency is excellent.

As the heat collection receiver for the tower-type solar thermal power generation, PTL 1 discloses a heat collection receiver. In the heat collection receiver, a heat absorption body, which includes a plurality of gas flow paths through which a heat medium flows and which is formed from silicon carbide, or silicon and silicon carbide, is accommodated in and supported by a funnel-shaped support body.
In the heat collection receiver, a. heat medium such as the air and a mixed gas containing the air is made to pass through the flow paths of the heat absorption body that is heated, and accordingly, the heat medium can obtain heat . In the tower-type solar thermal power generation, water is boiled by the obtained heat to produce steam, and a steam turbine is made to operate so as to generate electricity.

### Citation List

### Patent Literature

[PTL 1] US Patent No. 6003508

### Summary of Invention

### Technical Problem

It is necessary for the heat collection receiver to absorb the emitted solar light through the heliostat and to effectively convert the solar light into heat. However, in the heat collection receiver disclosed in PTL 1 or the like, since a surface that is irradiated with the solar light is a planar surface, there is a problem in that reflectance of the solar light is not sufficiently low, and absorption efficiency is not high. Therefore, a heat collection receiver having more excellent absorption efficiency is required.

The invention has been made to solve such a problem, and an object thereof is to provide a heat collection receiver that is capable of effectively absorbing emitted solar light through a heliostat and is capable of converting the solar light into heat, and a solar thermal power generation device using the same.

### Solution to Problem

That is, according to a first aspect of the invention, there is provided a heat collection receiver that is used in a solar thermal power generation device. The heat collection receiver includes a heat absorption body that includes one or a plurality of honeycomb units in which a plurality of flow paths through which a heat medium passes are formed, and a support body which accommodates and supports the heat absorption body and through which the heat medium flows. The honeycomb unit includes porous silicon carbide, and silicon that fills pores in the porous silicon carbide. In regard to a surface that is irradiated with solar light, a surface region in a predetermined depth from the surface is formed from a porous layer, and pores of the porous layer are not filled with the silicon.

In the heat collection receiver according to the first aspect, since the Honeycomb unit includes porous silicon carbide, and silicon that fills pores in the porous silicon carbide, the heat collection receiver becomes a dense body, and thus a heat accumulation property of the heat absorption body increases. In addition, the dense body in which the pores of the porous silicon carbide are filled with silicon has a high thermal conductivity, and thus heat that is obtained may be smoothly transferred to a heat medium such as the air.

In addition, in the heat collection receiver according to the first aspect, since in regard to a surface, which is irradiated with solar light, of the honeycomb unit, a surface region at a predetermined depth from the surface is formed from a porous layer, and pores of the porous layer are not filled with the silicon, it is possible to prevent solar light from being reflected by silicon. In addition, in the heat collection receiver according to the first aspect, it is easy for solar light to enter the inside of the porous layer in the surface of the honeycomb unit, and light reflected inside the porous layer comes into contact with a separate wall inside the porous layer. Accordingly, it is difficult for the reflected light to be emitted to the outside. As a result, the emitted solar light may be effectively converted into heat, and thus power generation may be effectively performed.

According to a second aspect of the invention, in the heat collection receiver, the honeycomb unit may further include porous carbon, and the surface region of the honeycomb unit may be formed from a porous carbon layer. Accordingly, a solar light reflectance of the surface layer itself of the honeycomb unit decreases, and thus heat absorption efficiency increases.

According to a third aspect of the invention, in the heat collection receiver, the surface region of the honeycomb unit may have a depth of 500 nm or more from the surface. This is for the following reasons. When the depth of the surface region is less than 500 nm, since the surface region is too thin, reflectance of solar light due to silicon contained in the honeycomb unit occurs, and thus the heat absorption efficiency decreases.

According to a fourth aspect of the invention, in the heat collection receiver, flow paths of 31.0 to 93.0 per cm² may be formed in the honeycomb unit, a thickness of a wall portion between the flow paths in the honeycomb unit may be 0.1 to 0.5 mm, a porosity of the porous silicon carbide may be 35 to 60%, and an average pore size may be 5 to 30 µm. In such porosity and a pore size, the porous silicon carbide is easily filled with silicon. In a case where the flow path of the dense honeycomb unit, which is obtained as described above, is configured in this manner, when a heat medium flows through the flow path, heat is effectively transferred from the heat absorption body formed from the honeycomb unit to the heat medium, and as a result thereof, the power generation may be performed with high efficiency.

In the honeycomb unit related to the invention, it is preferable that when a cross-section orthogonal to the flow path is formed, the number of flow paths per 1 cm² be 31.0 to 93.0 per cm². When the number of the flow paths of the honeycomb unit is less than 31.0 per cm², since the number of the flow paths of the honeycomb unit is small, it is difficult for the honeycomb unit to effectively perform heat exchange with the heat medium. On the other hand, when the number of the flow paths of the honeycomb unit exceeds 93.0 per cm², a cross-sectional area of one flow path of the honeycomb unit becomes small, and thus it is difficult for the heat medium to pass through the flow path.

According to a fifth aspect of the invention, in the heat collection receiver, a heat insulation material may be interposed between the heat absorption body and the support body. Accordingly, the heat absorption body may be reliably held by the heat insulation material, and due to this heat insulation material, it is possible to effectively prevent heat from escaping from the heat absorption body to the support body.

According to a sixth aspect of the invention, in the heat collection receiver, the heat absorption body may be configured in such a manner that the plurality of honeycomb units are bonded to each other through an adhesive layer that is formed on a side surface. Accordingly, the honeycomb units are bonded to each other in a reliable manner, and thus it is possible to prevent part of the honeycomb units from falling out due to a flow force of the heat medium that flows through the flow path of the honeycomb unit that is included in the heat absorption body.

According to a seventh aspect of the invention, in the heat collection receiver, the heat absorption body may be configured in such a manner that the plurality of honeycomb units are bonded to each other through a silicon layer that is formed on a side surface. Accordingly, the honeycomb units are bonded to each other in a reliable manner, and thus it is possible to prevent part of the honeycomb units from falling out due to a flow force of the heat medium that flows through the flow paths of the honeycomb unit that is included in the heat absorption body.

According to an eighth aspect of the invention, there is a provided a solar thermal power generation device in which the heat collection receiver according to any one of first to seventh aspects of the invention is used. Accordingly, the emitted solar light may be effectively converted into heat, and thus power generation may be effectively performed.

### Brief Description of Drawings

Fig. 1 (a) is a longitudinal cross-sectional diagram schematically illustrating a heat collection receiver related to a first embodiment of the invention, and Fig. 1(b) is a cross-sectional diagram taken along an A-A line of the heat collection receiver shown in Fig. 1(a).
Fig. 2 is an enlarged cross-sectional diagram illustrating the vicinity of a surface region of a honeycomb unit making up the heat collection receiver shown in Fig. 1(a).
Fig. 3 (a) is a front elevational diagram schematically illustrating a receiver array making up a solar thermal power generation device of the invention, and Fig. 3 (b) is a cross-sectional diagram taken along a B-B line of the receiver array shown in Fig. 3 (a) .
Fig. 4 is an explanatory diagram schematically illustrating a solar thermal power generation device related to a third embodiment of the invention.
Fig. 5 is a graph illustrating evaluation results of Example 1 and Comparative Examples 1 and 2 of the invention.

### Description of Embodiments

### (First Embodiment)

Hereinafter, a first embodiment that is an embodiment of a heat collection receiver of the invention will be described with reference to the attached drawings.

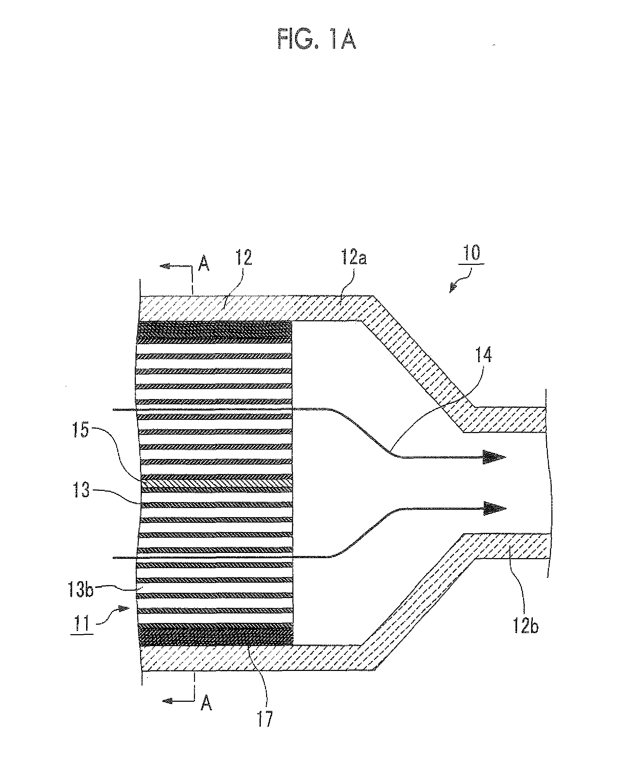

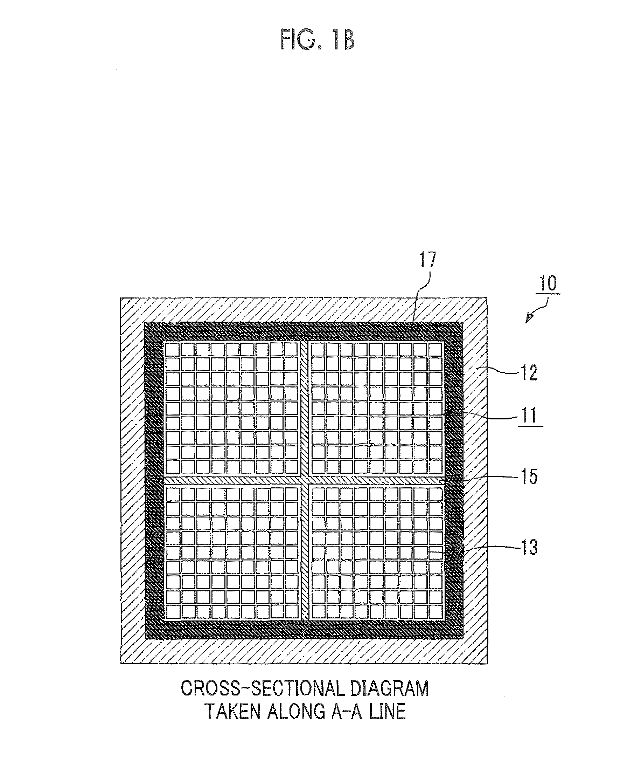

Fig. 1 (a) shows a longitudinal cross-sectional diagram schematically illustrating a heat collection receiver related to the first embodiment of the invention, and Fig. 1(b) shows a cross-sectional diagram taken along an A-A line of the heat collection receiver shown in Fig. 1(a) . Fig. 1(a) shows a longitudinal cross-sectional diagram that is obtained by cutting a honeycomb unit, which makes up a heat absorption body accommodated in the heat collection receiver, in a direction parallel to a flow path, and Fig. 1(b) shows a cross-sectional diagram illustrating a cross-section orthogonal to the flow path.

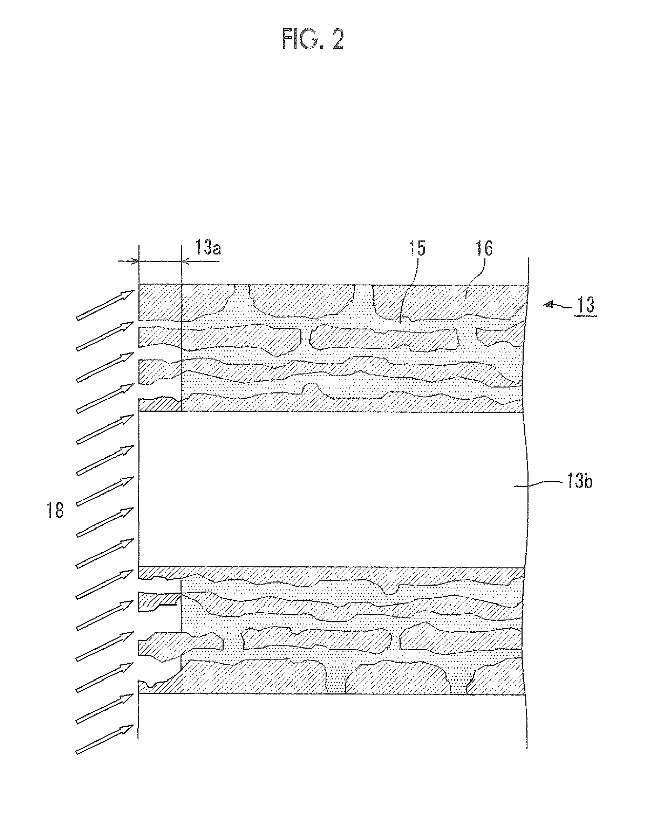

Fig. 2 shows an enlarged cross-sectional diagram illustrating the vicinity of a surface region of the honeycomb unit related to the first embodiment of the invention.

As shown in Fig. 1(a), 1(b), and Fig. 2, a heat collection receiver 10 related to the invention includes a heat absorption body 11 in which a plurality of honeycomb units 13 are bonded to each other through silicon 15 (an adhesive layer formed from silicon, hereinafter, also referred to as a silicon layer) that functions as an adhesive, and a support body 12 which accommodates and support the heat absorption body 11 and through which a heat medium 14 flows. In each of the honeycomb units 13, a plurality of flow paths 13b, through which a heat medium 14 flows, are provided in parallel with each other. In addition, a heat insulation material 17 formed from an inorganic fiber is interposed between the heat absorption body 11 and the support body 12, and thus the heat absorption body 11 is supported by and fixed to the support body 12 through the heat insulation material 17.

The honeycomb unit 13 includes a porous silicon carbide 16 having open pores, and silicon 15 that fills the open pores of the porous silicon carbide 16. In regard to a surface of the honeycomb unit 13, which is irradiated with solar light 18, a surface region at a predetermined depth from the surface is formed from a porous layer 13a. Fig. 2 shows a detailed structure of the porous layer 13a of the surface region of the honeycomb unit 13. The pores other than pores of the porous layer 13a are filled with silicon 15, whereby a dense body is obtained. However, the silicon 15 is not present at a portion of the porous layer 13a, and thus the porous layer 13a is configured as a porous body having open pores.

Accordingly, it is difficult for solar light 18 reflected by a heliostat to come into direct contact with the silicon 15, and thus it is possible to prevent the solar light 18 from being reflected by the silicon 15. In addition, since the surface region of the honeycomb unit 13 is formed from the porous layer 13a, it is easy for the solar light 18 to enter the inside of the porous layer 13a, and light reflected inside the porous layer 13a comes into contact with a separate wall inside the porous layer 13a. Accordingly, it is difficult for the reflected light to be emitted to the outside. As a result, the emitted solar light 18 may be effectively converted into heat.

The porous layer 13a may be formed from only the porous layer silicon carbide 16. In a case where the porous layer 13a is formed from the porous silicon carbide 16, the entirety of the open pores of the porous silicon carbide 16 are filled with the silicon 15, and then the silicon 15 that is filled once in the surface region of the porous silicon carbide 16 is removed by any method, whereby the honeycomb unit 13 may be produced. In addition, the porous layer 13a may be a layer in which the porous silicon carbide 16 exposed by removing the silicon 15 is further converted into carbon.

Examples of a method of converting the porous silicon carbide 16 in the porous layer 13a into carbon include a method in which an ambient atmosphere of the porous silicon carbide 16 is set to a vacuum atmosphere of 0.8 Torr or less, and then a heating treatment is performed at 1,600 to 1,700°C for 96 hours or more. According to this, silicon comes out from silicon carbide, and thus silicon carbide is converted into carbon.

In a case where the porous layer 13a is formed from silicon carbide, it is preferable that the lower limit of the thickness of the surface region in the porous layer 13a be 400 nm (0.40 µm), and more preferably 40 µm. The upper limit thereof is preferably 2 mm. In a case where the porous layer 13a is formed from carbon, it is preferable that the lower limit of the thickness of the porous layer 13a be 400 nm (0.40 µm), and more preferably 650 nm (0.65 µm). The upper limit thereof is preferably 2 mm.
Within this range, it is difficult for the porous layer 13a to reflect solar light, and the porous layer 13a may satisfactorily absorb the solar light. In addition, the heat transfer of the collected heat to the heat medium becomes satisfactory. When the thickness of the surface region in the porous layer 13a is smaller than the lower limit, the solar light reaches a dense layer. On the other hand, when the thickness of the surface region in the porous layer 13a is larger than the upper limit, a region of the dense body relatively decreases, and thus an amount of heat transfer to the heat medium is apt to decrease.
In a case where the porous layer 13a is formed from carbon, since it is easy for carbon to absorb the solar light 18, the thickness of the porous layer 13a may be set to be small.
Particularly, in a case where the porous layer 13a is formed from silicon carbide, it is preferable that the thickness of the surface region be 0.40 to 78 µm, and more preferably 47 to 78 µm. In a case where the porous layer 13a is formed from carbon, it is preferable that the thickness of the surface region be 0.40 to 78 µm, and more preferably 0.65 to 78 µm.

In the heat collection receiver 10 related to the invention, it is preferable that a porosity of the porous silicon carbide 16 be 35 to 60%. When the porosity is less than 35%, part of the pores becomes a closed pore, and thus it is difficult for the entirety of the pores to be filled with the silicon 15. On the other hand, when the porosity exceeds 60%, the strength of the honeycomb unit 13 decreases, and thus it is easy for the honeycomb unit 13 to be broken due to repetition of temperature rise and fall (thermal hysteresis) of the honeycomb unit 13.
In addition, the porosity is measured by a mercury intrusion method.

It is preferable that an average pore size of the porous silicon carbide 16 be 5 to 30 µm. When the average pore size of the porous silicon carbide 16 is less than 5 µm, it is easy for part of the pores to be a closed pore, and thus it is difficult for the pores to be filled with the silicon 15. On the other hand, when the average pore size of the porous silicon carbide 16 exceeds 30 µm, the mechanical strength of the porous silicon carbide 16 decreases, and thus the strength of the honeycomb unit 13 also decreases.

It is preferable that 15 to 50 parts by weight of the silicon 15 be impregnated with respect to 100 parts by weight of the porous silicon carbide. When the silicon impregnation in the porous silicon carbide 16 is performed within this range, the silicon 15 is buried in the open pores of the porous silicon carbide 16 and thus the honeycomb unit becomes a dense body.

In the honeycomb unit 13 related to the invention, when a cross-section orthogonal to each flow path 13b is formed, it is preferable that the number of the flow paths 13b per 1 cm² be 31.0 to 93.0 per cm². When the number of the flow paths 13b of the honeycomb unit 13 is less than 31.0 per cm² since the number of the flow paths 13b of the honeycomb unit 13 is small, it is difficult for the honeycomb unit 13 to effectively perform heat exchange with the heart medium 14. On the other hand, when the number of the flow paths 13b of the honeycomb unit 13 exceeds 93.0 per cm², a cross-sectional area of one flow path 13b of the honeycomb unit 13 becomes small, and thus it is difficult for the heat medium 14 to pass through the flow path 13b.

In addition, it is preferable that the thickness of a wall portion of the honeycomb unit 13 between the flow paths be 0.1 to 0.5 mm. When the thickness of the wall portion of the honeycomb unit 13 is less than 0.1 mm, the mechanical strength of the wall portion of the honeycomb unit decreases, and thus it is easy for the honeycomb unit to be broken. On the other hand, the thickness of the wall portion of the honeycomb unit 13 exceeds 0.5 mm, the wall portion of the honeycomb unit 13 becomes too thick, and thus a flow amount of the heat medium 14 with respect to an area of the honeycomb unit 13 decreases. As a result, heat efficiency decreases.

In the invention, the porous silicon carbide 16 is used as porous ceramic that is filled with the silicon 15, but another porous ceramic may be used. Examples of another porous ceramic include nitride ceramics such as aluminum nitride, silicon nitride, and boron nitride, carbide ceramics such as silicon carbide, zirconium carbide, and tantalum carbide, and the like. These kinds of ceramics have high thermal conductivity in themselves.

In a case of producing the heat absorption body 11 using the plurality of honeycomb units 13, silicon 15 that is the same material as the silicon 15 fills inside each of the honeycomb units 13 (the porous silicon carbide 16) may be used as an adhesive to form an adhesive layer, and then the honeycomb units 13 may be bonded to each other by the adhesive layer, whereby the heat absorption body 11 may be provided.

In addition, in Fig. 1(b), the cross-sectional shape of the flow path 13b of the honeycomb unit 13 is set to a rectangular shape, but the cross-sectional shape of the flow path 13b of the honeycomb unit 13 is not particularly limited, and may be a hexagonal shape or the like. In addition, the cross-sectional shape of the support body 12 shown in Fig. 1 (b) is also a rectangular shape, but the cross-sectional shape of the support body 12 is not particularly limited to the rectangular shape, and may be a hexagonal shape or the like.

As described above, although the cross-sectional shape of the support body 12 viewed from the front side as shown in Fig. 1(b) is a rectangular shape, a hexagonal shape, or the like, the entire shape of the support body 12 is a funnel shape. That is, a cross-section (a cross-section that is parallel to a surface, which receives the solar light 18, of the heat absorption body 11) of a heat collection portion 12a has a large area, the heat collection portion 12a being a portion in which the heat absorption body 11 is accommodated and to which the heat medium 14 flows. However, as the cross-section moves in a direction parallel to an exit direction of the heat medium 14, the cross-sectional area gradually decreases, and then the cross-section area becomes approximately constant at the gas outlet 12b.

Although a material of the support body 12 is not particularly limited, since the heat absorption body 11 reaches a temperature of approximately 1,000°C, it is preferable that the support body 12 have heat resistance, and thus metal or ceramic is preferable as the material.
Examples of the metallic material include iron, nickel, chrome, aluminum, tungsten, molybdenum, titanium, lead, copper, zinc, alloys of these metals, and the like. In addition, examples of the ceramic include nitride ceramic such as aluminum nitride, silicon nitride, boron nitride, and titanium nitride, carbide ceramic such as zirconium carbide, titanium carbide, tantalum carbide, and tungsten carbide, oxide ceramic such as silica, alumina, mullite, and zirconia, and the like. In addition to these, examples of the material of the support body 12 include a composite of metal and nitride ceramic, a composite of metal and carbide ceramic, and the like. Among these, a ceramic such as alumina and silicon carbide is preferable from a viewpoint of heat resistance.

In the heat collection receiver 10 of the invention, the heat insulation material 17 is interposed between the heat absorption body 11 and the support body 12.
A material of the heat insulation material 17 is not particularly limited and may be a material including various inorganic materials such as an inorganic fiber, an inorganic particle, and an inorganic binder, a mat type formed from the inorganic fiber is preferable. In this embodiment, an example using a mat, which is formed from the inorganic fiber and has a rectangular shape in a plan view, as a heat insulation material will be described below.
The heat insulation material 17 is configured in such a manner that one or a plurality of mats, which are formed from the inorganic fiber and has a rectangular shape in a plan view, are laminated, and the heat insulation material 17 is accommodated in the support body 12 in a state of being wound around the side surface of the heat absorption body 11, whereby the heat absorption body 11 may be supported and fixed at the inside the support body 12.

The inorganic fiber making up the mat is not particularly limited and may be an alumina-silica fiber, an alumina fiber, a silica fiber, or the like. A material of the inorganic fiber may be changed in accordance with properties such as heat resistance and wind erosion resistance that are required for a sealing material. In a case of using the alumina-silica fiber as the inorganic fiber, it is preferable to use a fiber in which, for example, a compositional ratio of alumina and silica is 60:40 to 80:20.

It is preferable that a needle-punching treatment be performed with respect to the mat. When the needle-punching treatment is performed with respect to the mat, it is difficult for constituent materials such as an inorganic fiber sheet making up the mat to fall to pieces, and thus the constituent materials have one collected mat shape. In addition, when the mat is needle-punched in a lateral direction orthogonal to the longitudinal direction, it looks like as if the mat is folded at a needle-punched portion in a lateral direction thereof, and thus when the mat is wound around an object, it is easy to wind the mat.

In addition, a product, which is obtained by impregnating an organic binder such as an acrylic resin into the mat and by subjecting the resultant mat to compression drying to reduce the thickness thereof, may be used as the heat insulation material 17. After the heat insulation material 17 is wound around the heat absorption body 11, the the heat absorption body 11 is inserted into the support body 12, and thus the heat absorption body 11 is mounted to the support body 12, when the heat absorption body 11 is irradiated with reflected light of the solar light 18, a temperature of the heat absorption body 11 increases to approximately 1,000°C. Accordingly, the organic binder is decomposed and eliminated, and thus a compressed state due to the organic binder is opened. As a result, the heat absorption body 11 is reliably held by and fixed to the support body 12. It is preferable that the thickness of the heat insulation material 17 be 3 to 14 mm.

Hereinafter, a method of manufacturing the heat collection receiver related to this embodiment will be described.
First, the porous silicon carbide making up the honeycomb unit is produced.
When producing the porous silicon carbide, as raw materials, silicon carbide powders having average particle sizes different from each other, an organic binder, a plasticizer, a lubricant, water, and the like are mixed with each other to prepare a wet mixture for molding.

Subsequently, a molding process of putting the wet mixture into an extruder and extrusion-molding the wet mixture is performed to prepare a honeycomb unit molded body in which a plurality of flow paths are formed in a longitudinal direction and which has a quadrangular prism shape.

Next, a cutting process of cutting both ends of the honeycomb unit molded body using a cutting device is performed to cut the honeycomb unit molded body into a predetermined length, and then the cut honeycomb unit molded body is dried using a drying machine.

Next, a degreasing process of heating the organic material contained in the honeycomb unit molded body in a degreasing furnace is performed, and the resultant degreased honeycomb unit molded body is conveyed into a baking furnace to perform a baking process to produce a honeycomb unit baked body (porous silicon carbide). In addition, the honeycomb unit baked body is simply referred to as a honeycomb unit.

Subsequently, a metal impregnation process of impregnating a metal in the honeycomb unit baked body is performed. In a case of impregnating silicon in the honeycomb unit baked body, for example, it is preferable that a carbonaceous material be impregnated in the honeycomb unit baked body in advance. Examples of the carbonaceous material include various kinds of organic materials such as a furfural resin, a phenol resin, lignosulfonate, polyvinyl alcohol, corn starch, molasses, coal-tar pitch, and alginate. In addition, pyrolytic carbon such as carbon black and acetylene black may be similarly used.

The reason why the carbonaceous material is impregnated in the honeycomb unit baked body in advance is that a new silicon carbide film is formed on a surface of each open pore of the honeycomb unit baked body, and thus bonding between fused silicon and the honeycomb unit baked body becomes strong. In addition, the strength of the honeycomb unit baked body increases due to the impregnation of the carbonaceous material.

In addition, as a method of filling open pores of the honeycomb unit baked body with silicon, for example, a method in which silicon is heated and melted, and then the melted silicon is sucked into the open pores and the pores are filled with the silicon may be exemplified. In this case, silicon in a clumped state, a powder shape, or a particle shape is placed on an upper surface or a lower surface (a side surface excluding end surfaces) of the honeycomb unit baked body, the silicon is melted under a vacuum condition at 1450°C or higher to fill the open pores of the honeycomb unit baked body with silicon. An impregnation rate of silicon with respect to the honeycomb unit baked body may be controlled by repeating the above-described process or by changing the weight of silicon that is placed.

In addition, a method, in which pulverized silicon is dispersed in a dispersion medium solution, this dispersion medium solution is impregnated in the honeycomb unit baked body, the resultant honeycomb unit baked body is dried, and then the dried honeycomb unit baked body is heated to a temperature equal to or higher than a melting temperature of silicon, may be applicable.
In addition, the metal impregnation process may be performed with respect to the honeycomb unit molded body (that is, the honeycomb unit before the baking process). According to this method, power saving is realized, and thus manufacturing cost may be suppressed.

According to the above-described method, a silicon-filled honeycomb unit may be obtained. In regard to the honeycomb unit, one honeycomb unit may be used as is as the heat absorption body, but a plurality of honeycomb units are bonded with each other using an adhesive and then the bonded honeycomb units may be used as the heat absorption body. The heat absorption body in which the plurality of honeycomb units are bonded to each other through an adhesive layer may be produced by the following method.
That is, when the plurality of honeycomb units are bonded to each other through a silicon layer by using silicon as an adhesive, filling with silicon with respect to the porous silicon carbide (honeycomb unit baked body) and bonding of the plurality of honeycomb units are performed simultaneously. In this case, for example, the plurality of honeycomb unit baked bodies, in which pulverized silicon is impregnated, are assembled to have a shape of the heat absorption body using a predetermined fastening device, and then the resultant assembly is heated. In addition, as another method, it is possible to adopt a method in which a plurality of honeycomb unit baked bodies into which silicon is not impregnated are assembled, and then silicon is placed on an upper surface or a lower surface (a side surface excluding end surfaces) of each of the honeycomb baked bodies, or the like, and heating is performed in a vacuum atmosphere. Furthermore, a silicon powder in a slurry state is applied to a side surface of each honeycomb unit baked body, and the honeycomb unit baked bodies are heated in a state in which two honeycomb unit baked bodies are brought into contact with each other through an application surface so as to bond the honeycomb unit baked bodies, and then this processes may be repeated.

According to this method, open pores of each of the honeycomb unit baked body (porous silicon carbide) are filled with silicon, and at the same time, silicon also spreads between side surfaces of the honeycomb baked bodies to form an adhesive layer, whereby honeycomb unit baked bodies may be bonded to each other through silicon.

When forming a porous layer in the honeycomb unit (porous silicon carbide) that is filled with silicon, it is necessary to remove silicon of a surface region at a predetermined depth from a surface of the honeycomb unit by etching or the like. Examples of a method for etching silicon include wet etching using a liquid, dry etching using a gas, and the like.
Examples of the wet etching method include a method of etching silicon using a fluonitric acid obtained by mixing a hydrofluoric acid and a nitric acid, potassium hydroxide, tetramethylammonium hydroxide (TMAH), or the like. In addition, examples of the dry etching method include a method of etching silicon by plasma etching using Freon or the like.
In addition, it is possible to adopt a method in which the honeycomb unit filled with silicon is heated under a vacuum atmosphere to evaporate silicon.

Furthermore, the porous layer is formed in the surface region of the honeycomb unit according to the above-described method, and then the porous silicon carbide in the porous layer may be additionally converted into carbon by the above-described method according to necessity.

The support body may be produced by using a method that has been used in the related art. When producing a support body formed from ceramic, a mixture including a ceramic powder, an organic binder, and the like is subjected to compression molding, injection molding, casting molding, or the like, and then the resultant molded body is subjected to a degreasing process and a baking process, whereby the support body may be produced.

When assembling the heat collection receiver 10, the heat insulation material 17 is wound around the heat absorption body 11 that is produced by the above-described method, and then the heat absorption body 11 around which the heat insulation material 17 is wound is inserted into the support body 12 and is fixed therein, whereby the heat collection receiver 10 may be assembled.

Hereinafter, operation effects of the heat collection receiver of this embodiment will be described. (1) In the heat collection receiver of this embodiment, since the honeycomb unit, which is included in the heat absorption body, includes porous silicon carbide, and silicon that fills pores in the porous silicon carbide, the honeycomb unit becomes a dense body. Since the honeycomb unit is a dense body, heat capacity thereof increases, and thus heat accumulation property of the honeycomb unit increases. In addition, since the honeycomb unit is a dense body including porous silicon carbide and silicon, thermal conductivity is high, and it is possible to smoothly transfer heat that is obtained to a heat medium such as the air.

(2) In the heat collection receiver of this embodiment, since in regard to a surface of the honeycomb unit, which is irradiated with solar light, a surface region at a predetermined depth from the surface is formed from a porous layer, it is possible to prevent the solar light from being reflected by silicon. In addition, in the heat collection receiver of this embodiment, it is easy for solar light to enter the inside of the porous layer of the honeycomb unit, and light reflected inside the porous layer comes into contact with a separate wall inside the porous layer of the honeycomb unit. Accordingly, it is difficult for the reflected light to be emitted to the outside. As a result, the emitted solar light may be effectively converted into heat, and thus power generation may be effectively performed.

(3) In the heat collection receiver of this embodiment, in a case where the porous layer of the surface region of the honeycomb unit is formed from a porous carbon layer, a solar light reflectance of the surface layer itself decreases, and thus heat absorption efficiency increases.

(4) 3 In the heat collection receiver of this embodiment, flow paths of 31.0 to 93.0 per cm² are formed in the honeycomb unit that is included in the heat absorption body, a thickness of a wall portion between the flow paths in the honeycomb unit is 0.1 to 0.4 mm, a porosity of the honeycomb unit is 35 to 60%, and an average pore size is 5 to 30 µm. Accordingly, the pores of the honeycomb unit are easily filled with silicon. In addition, when a heat medium flows through the flow path of the honeycomb unit, heat is effectively transferred from the heat absorption body to the heat medium, and as a result thereof, the power generation may be performed with high efficiency.

(5) In the heat collection receiver of this embodiment, a heat insulation material is interposed between the heat absorption body and the support body. Accordingly, the heat absorption body is reliably held by the heat insulation material, and due to this heat insulation material, it is possible to effectively prevent heat from escaping from the heat absorption body to the support body.

(6) In the heat collection receiver of this embodiment, the heat absorption body is configured in such a manner that the plurality of honeycomb units are bonded to each other through a silicon layer that is formed on a side surface. Accordingly, the honeycomb units are bonded to each other in a reliable manner, and thus it is possible to prevent part of the honeycomb units from falling out due to an operation of a force in a flow direction of the heat medium that flows through the flow path of the heat absorption body.

### Examples

Hereinafter, examples illustrating a first embodiment of the invention in more detail are described, but the invention is not limited to this example.

### (Example 1)

### (Process of Producing Honeycomb Unit Baked Body)

52.8% by weight of silicon carbide coarse powder having an average particle size of 22 µm, and 22.6% by weight of silicon carbide fine powder having an average particle size of 0.5µm were mixed with each other. To the resultant mixture that is obtained, 2.1% by weight of acrylic resin, 4.6% by weight of organic binder (methyl cellulose), 2.8% by weight of of lubricant (Unilube manufactured by NOF CORPORATION), 1.3% by weight of glycerin, and 13.8% by weight of water are added, and the resultant material was kneaded, whereby a wet mixture was obtained. Next, an extrusion molding process of extrusion-molding the obtained wet mixture was performed, whereby a green honeycomb unit molded body having a quadrangular prism shape was prepared.

Subsequently, the green honeycomb unit molded body was dried using a microwave drying machine, whereby a dried body of the honeycomb unit molded body was obtained.

A degreasing process of degreasing a dried body of the honeycomb unit molded body at 400°C was performed, and a baking process was performed under conditions of a normal pressure argon atmosphere at 2200°C for three hours to produce a honeycomb unit baked body formed from silicon carbide. A porosity of the honeycomb unit baked body was 42%, an average pore size was 11 µm, a size was 34.3 mmx34.3 mmx45 mm, the number of cells (cell density) was 50 per cm², and a thickness of a cell wall was 0.25 mm (10 mil).

### (Silicon Filling Process)

Subsequently, phenol resin (carbonization rate: 30% by weight) was impregnated into the obtained honeycomb unit baked body formed from porous silicon carbide in advance at a normal temperature and a normal pressure, and then the resultant molded body was dried.

Next, particle-shaped silicon was placed on an upper surface and a lower surface (side surfaces excluding end surfaces) of the honeycomb unit baked body, and then the honeycomb unit baked body was maintained under a vacuum condition at 1,650°C for two hours to melt silicon, whereby open pores of the honeycomb unit baked body were filled with silicon.
In addition, an impregnation amount of silicon with respect to 100 parts by weight of silicon carbide was set to 40 parts by weight.

Thermal conductivity of the obtained honeycomb unit 13 was 120 W/m.K, and density was 2.80 g/cm³.

Next, silicon that was present in the surface region of the honeycomb unit 13 was etched using a fluonitric acid obtained by mixing 49 wet% hydrofluoric acid, 61 wt% nitric acid, and pure water in a volume ratio of 1:1:1. That is, the honeycomb unit 13 was immersed in the fluonitric acid liquid to a depth of 10 mm with a surface irradiated with the solar light 18 facing a lower side, and was pulled up after one hour. After pulling the honeycomb unit 13, the surface region thereof was observed. From the observation, it could be seen that silicon was etched to a depth of 47 µm from the surface, and only the porous layer 13a of the honeycomb unit 13 (silicon carbide) remained.

### (Binding Process)

Next, heat resistant double-sided tape was adhered to a bonding surface of the honeycomb unit 13, and a total of 16 honeycomb units 13 of four pieces (in a vertical side) x four pieces (in a horizontal side) were bonded to each other through the heat resistant double-sided tape to form the heat absorption body 11.

### (Example 2)

A honeycomb unit 13 in which silicon was etched to a depth of 78 µm from the surface of the honeycomb unit 13 and only the porous layer 13a of the honeycomb unit 13 (silicon carbide) remained was obtained in the same manner as Example 1 except that the honeycomb unit 13 was impregnated in the fluonitric acid for two hours. The same binding process as Example 1 was performed using the obtained honeycomb unit 13 to produce a heat absorption body.

### (Example 3)

A honeycomb unit 13 was prepared in the same manner as Example 1. Next, the honeycomb unit 13 was immersed in a fluonitric acid having the same composition as Example 1 to a depth of 5 mm with a surface irradiated with the solar light 18 facing a lower side, and was pulled up after one hour. After pulling the honeycomb unit 13, the surface region thereof was observed. From the observation, it could be seen that silicon was etched to a depth of 650 nm (0.65 µm) from the surface of the honeycomb unit, and only the porous layer 13a of the honeycomb unit 13 (silicon carbide) remained.
Next, a heating treatment was performed with respect to the obtained honeycomb unit 13 under a vacuum atmosphere of 0.8 Torr at 1,650°C for 96 hours, and thus silicon was removed from the honeycomb unit 13 (porous silicon carbide 16), and silicon carbide was converted into carbon. The same binding process as Example 1 was performed using the honeycomb unit that was obtained through the above-described processes to produce a heat absorption body.

### (Example 4)

A honeycomb unit 13 in which silicon was etched to a depth of 78 µm from the surface of the honeycomb unit 13 and only the porous layer 13a of the honeycomb unit 13 (silicon carbide) remained was obtained in the same manner as Example 2. Next, a heating treatment was performed with respect to the obtained honeycomb unit 13 under a vacuum atmosphere of 0.8 Torr at 1,650°C for 96 hours, and thus silicon was removed from the honeycomb unit 13 (porous silicon carbide 16), whereby a honeycomb unit of which surface region was converted into carbon was obtained. The same binding process as Example 1 was performed using the honeycomb unit 13 that was obtained to produce a heat absorption body.

### (Reference Example 1)

A honeycomb unit 13 in which silicon was etched to a depth of 400 nm (0.40 µm) from the surface thereof and only the porous layer 13a of the honeycomb unit 13 (silicon carbide) remained was obtained in the same manner as Example 1 except that the honeycomb unit 13 was impregnated in the fluonitric acid for one hour. A heat absorption body was produced in the same manner as the binding process of Example 1 by using the obtained honeycomb unit 13.

### (Reference Example 2)

A honeycomb unit 13 in which silicon was etched to a depth of 400 nm (0.40 µm) from the surface thereof and only the silicon carbide porous layer 13a remained was obtained in the same manner as Reference Example 1. Next, a heating treatment was performed with respect to the obtained honeycomb unit 13 under a vacuum atmosphere of 0.8 Torr at 1,650°C for approximately 96 hours, and thus the silicon 15 was removed from the honeycomb unit 13 (porous silicon carbide 16), whereby a honeycomb unit 13 of which surface region was converted into carbon was obtained. The same binding process as Example 1 was performed using the honeycomb unit 13 that was obtained to produce a heat absorption body.

### (Comparative Example 1)

A honeycomb unit 13, in which the porous layer 13a was not formed and silicon remained in the surface region of the honeycomb unit 13, was obtained in the same manner as Example 1 except that the fluonitric acid treatment was not performed. The same binding process as Example 1 was performed using the honeycomb unit 13 that was obtained to produce a heat absorption body.

### (Comparative Example 2)

After a honeycomb unit baked body was produced in the same manner as Example 1, the filling of silicon was not performed. The same binding process as Example 1 was performed using the honeycomb unit baked body that was obtained to produce a heat absorption body.

### (Evaluation of Sample)

First, as an inorganic fiber mat having a compositional ratio of Al₂O₃: SiO₂=72 : 28 (weight ratio), the insulation material 17 in which an average fiber length of the inorganic fiber is 5.1 µm, an average fiber length is 60 mm, a volume density is 0.15 g/cm³, and a weight per unit area is 1,400 g/m² was wound around a side surface of the heat absorption body that was obtained in each of the examples, reference examples, and comparative examples to a thickness of 14 mm. The resultant objects that were obtained were set as a sample for temperature measurement (hereinafter, simply referred to as a "samples").

Next, each sample was irradiated with a film lamp at a distance of 100 mm from a sample surface using a spot film lamp RPS-500 WB, 100 V and 150 W (manufactured by Panasonic Corporation) for 30 minutes, and a temperature of the sample from initiation of the irradiation to 30 minutes after termination of the irradiation) was measured every 10 seconds by a thermocouple that was directly attached to the sample.

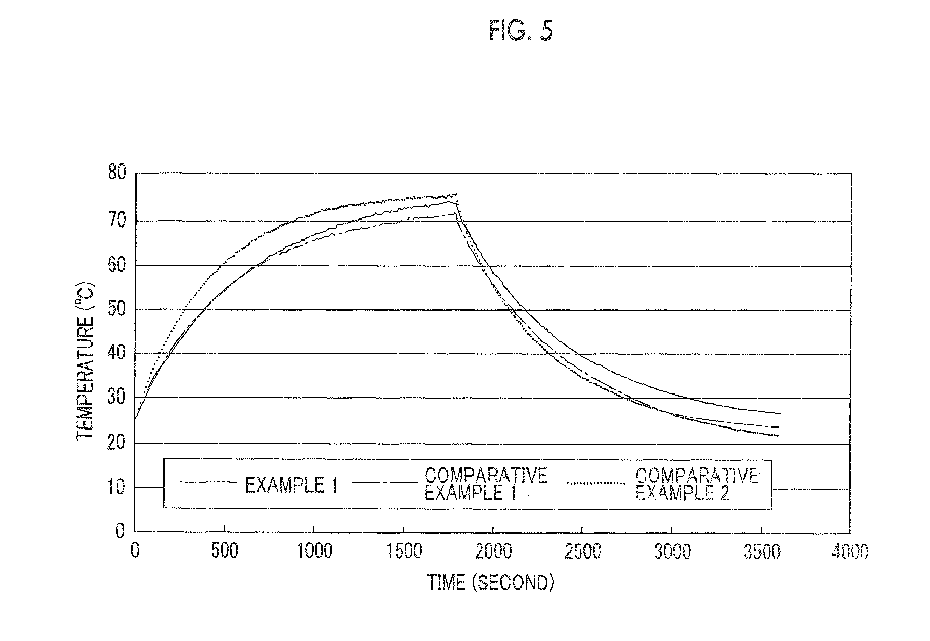

Fig. 5 shows a graph illustrating evaluation results of Example 1, and Comparative Examples 1 and 2. In the graph, the vertical axis represents a temperature (°C) and the horizontal axis represents an elapsed time (seconds). In addition, evaluation results with respect to all of the examples, the reference examples, and the comparative examples are shown in Table 1. In Table 1, temperature measurement results (the highest temperature and temperatures after 30 minutes elapsed from the termination of the lamp irradiation) of the samples related to the respective examples, comparative examples, and the reference examples. In addition, a silicon impregnation ratio (parts by weight/100 parts by weight of SiC) of the honeycomb unit, thermal conductivity (W/m·K), a material of the porous layer, and a thickness of the porous layer were shown. In addition, measurement of the thermal conductivity was performed by a laser flash method.

**[Table 1]**

| | Impregnation amount of silicon (parts by weight/100 parts by weight of SiC) | Thermal conductivity (W/m·K) | Material of porous layer | Thickness of porous layer | The highest temperature (°C) | Temperature after 30 minutes (°C) |
|---|---|---|---|---|---|---|
| Example 1 | 40 | 120 | Silicon carbide | 47 µm | 74.0 | 26.8 |
| Example 2 | 40 | 120 | Silicon carbide | 78 µm | 74.2 | 26.5 |
| Example 3 | 40 | 120 | Carbon | 0.65 µm | 75.7 | 26.5 |
| Example 4 | 40 | 120 | Carbon | 78 µm | 75.8 | 26.7 |
| Reference Example 1 | 40 | 120 | Silicon carbide | 0.40 µm | 71.5 | 23.9 |
| Reference Example 2 | 40 | 120 | Carbon | 0.40 µm | 71.9 | 23.8 |
| Comparati ve Example 1 | 40 | 120 | Not present | 0 µm | 71.2 | 23.7 |
| Comparati ve Example 2 | 0 | 45 | Silicon carbide | The entirety of honeycom b unit | 75.6 | 21.9 |

As is clear from results that are shown in Fig. 5 and Table 1, in samples related to Examples 1 to 4, heat from the light is easily absorbed and a temperature easily increases compared to samples in which the porous layer is not formed on the surface of the honeycomb unit like Comparative Example 1. In addition, in the samples related to Examples 1 to 4, heat capacity is large. Therefore, compared to the sample in which silicon is not filled like Comparative Example 2, the temperature rise is relatively slower, but a rate of the sample temperature drop is small after termination of the lamp irradiation, and a temperature after 30 minutes from the termination of the lamp irradiation becomes high in the sample in which silicon is filled.

In addition, as shown in Reference Examples 1 and 2, in a case where the thickness of the porous layer is as thin as 0.40 µm (400 nm), it is considered that a solar light absorption rate of the heat absorption body decreases a little. The thermal conductivity of Examples 1 to 4 is 120 W/m·K, and the thermal conductivity of Comparative Example 2 is 45 W/m·K. From these results, it can be seen that the thermal conductivity is improved by impregnating silicon, and thus it is preferable to impregnate silicon to the honeycomb unit.

### (Second Embodiment)

Hereinafter, a second embodiment that is another embodiment of the heat collection receiver of the invention will be described. The heat collection receiver related to this embodiment is configured in the same manner as the heat collection receiver related to the first embodiment except that an adhesive layer is formed by using an adhesive paste as the adhesive that bonds and binds the plurality of honeycomb units 13.

Therefore, in the following description, a description will be made mainly with respect to the adhesive paste related to this embodiment.
That is, in the first embodiment, in the case of producing the heat absorption body 11 using the plurality of honeycomb units 13, silicon 15, which is the same material as the silicon 15 that fills the inside of the porous silicon carbide 16, is used as the adhesive to bond the honeycomb units 13 to each other, whereby the heat absorption body 11 was produced.

On the other hand, in this embodiment, the honeycomb units 13 are bonded to each other by using an adhesive paste including at least an inorganic particle and an inorganic binder to produce the heat absorption body 11. The adhesive paste may include an inorganic fiber and/or an organic binder.

Examples of the inorganic binder contained in the adhesive paste include silica sol, alumina sol, and the like. These may be used alone, or in a combination of two or more kinds. In regard to the inorganic binder, the silica sol is preferable. A solid content of this material remains in the adhesive layer.

In addition, it is preferable that the lower limit of the content of the inorganic binder be 1% by weight by the solid content, and more preferably 5% by weight. On the other hand, it is preferable that the upper limit of the content of the inorganic binder be 30% by weight by the solid content, and more preferably 15% by weight. When the content of the inorganic binder is less than 1% by weight, there is a tendency for the bonding strength of the adhesive layer to decrease. On the other hand, when the content of the inorganic binder exceeds 30% by weight, there is a tendency for the thermal conductivity of the adhesive layer to decrease.

Examples of the organic binder contained in the adhesive paste include polyvinyl alcohol, methyl cellulose, ethyl cellulose, carboxymethyl cellulose, and the like. These may be used alone, or in a combination of two or more kinds. In regard to the organic binder, carboxymethyl cellulose is preferable.

It is preferable that the lower limit of the content of the organic binder be 0.1% by weight by a solid content, and more preferably 0.4% by weight. On the other hand, it is preferable that the upper limit of the content of the organic binder be 5.0% by weight by the solid content, and more preferably 1.0% by weight. When the content of the organic binder is less than 0.1% by weight by the solid content, it is difficult to suppress migration of the adhesive layer. On the other hand, when the content of the organic binder exceeds 5.0% by weight by the solid content, an amount of organic content, which is decomposed to gases, becomes too much in the adhesive layer, and thus there is a tendency for the bonding strength of the adhesive layer to decrease.

Examples of the inorganic fiber contained in the adhesive paste include ceramic fibers such as silica-alumina, mullite, alumina, and silica. Theses may be used alone, or in a combination of two or more kinds. In regard to the inorganic fiber, alumina fiber is preferable.

It is preferable that the lower limit of the content of the inorganic fiber be 10% by weight, and more preferably 20% by weight. On the other hand, it is preferable that the upper limit of the content of the inorganic fiber be 70% by weight, and more preferably 40% by weight. When the content of the inorganic fiber is less than 10% by weight, there is a tendency for elasticity of the adhesive layer to decrease. On the other hand, when the content of the inorganic fiber exceeds 70% by weight, there is a tendency for the thermal conductivity of the adhesive layer to decrease, and there is a tendency for an effect as an elastic body to decrease.

Examples of an inorganic particle contained in the adhesive paste include carbide, nitride, and the like. An inorganic powder such as silicon carbide, silicon nitride, boron nitride may be exemplified. These may be used alone, or in a combination of two or more kinds. In regard to the inorganic particle, silicon carbide that is excellent in thermal conductivity is preferable.

It is preferable that the lower limit of the content of the inorganic particle be 3% by weight, more preferably 10% by weight, and still more preferably 20% by weight. On the other hand, it is preferable that the upper limit of the content of the inorganic particle be 80% by weight, and more preferably 40% by weight. When the content of the inorganic particle is less than 3% by weight, there is a tendency for the thermal conductivity of the adhesive layer to decrease. On the other hand, when the content of the inorganic particle exceeds 80% by weight, in a case where the adhesive layer is exposed to a high temperature, there is a tendency for the bonding strength of the adhesive layer to decrease.

The organic binder contained in the adhesive paste is decomposed and removed when a temperature of the honeycomb unit rises, but the solid content of the other inorganic particle and inorganic binder, and the like are contained, and thus a sufficient bonding force may be maintained.

In this embodiment, it is preferable that the adhesive paste contain the inorganic particle, the inorganic fiber, and the inorganic binder, and more preferably the inorganic particle, the inorganic fiber, the organic binder, and the inorganic binder.

Next, a method of manufacturing the heat collection receiver related to this embodiment will be described.
In the method of manufacturing the heat collection receiver related to this embodiment, the heat collection receiver is also manufactured in the same manner as the first embodiment except that the adhesive paste of the above-described configuration is used as the adhesive paste that bonds the honeycomb units to each other.

That is, when bonding the honeycomb units to each other, the adhesive paste may be applied to a side surface (a surface in which a flow path is not formed) to bond the honeycomb units to each other, and then the bonded honeycomb unit may be dried. As a drying condition, for example, 120°C and 3 to 10 hours may be exemplified.

Hereinafter, an operation effect of the heat collection receiver related to this embodiment will be described. In this embodiment, in addition to the operation effects (1) to (5) of the first embodiment, the following effect is provided.

(7) In the heat collection receiver of this embodiment, the heat absorption body is configured in such a manner that the plurality of honeycomb units are bonded to each other through the adhesive layer that is formed on a side surface. Accordingly, the honeycomb units are bonded to each other in a reliable manner, and thus it is possible to reliably prevent part of the honeycomb units from falling out due to an operation of a force in a flow direction of the heat medium that flows through the flow path of the heat absorption body. In addition, since the adhesive has heat resistance, the heat collection receiver may be used over a long period of time in a stable manner.

### (Third Embodiment)

Hereinafter, a third embodiment that is an embodiment of a solar thermal power generation device of the invention will be described.
In the solar thermal power generation device related to this embodiment, the heat collection receiver related to the first embodiment is used.

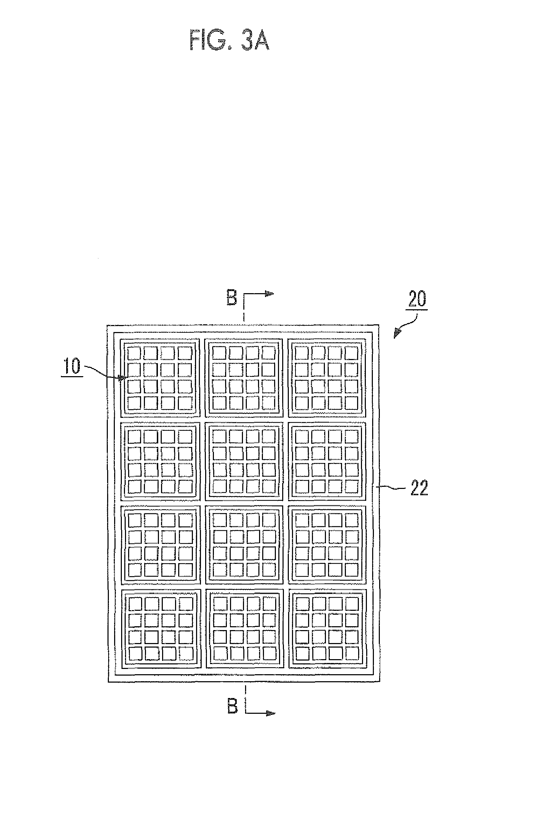

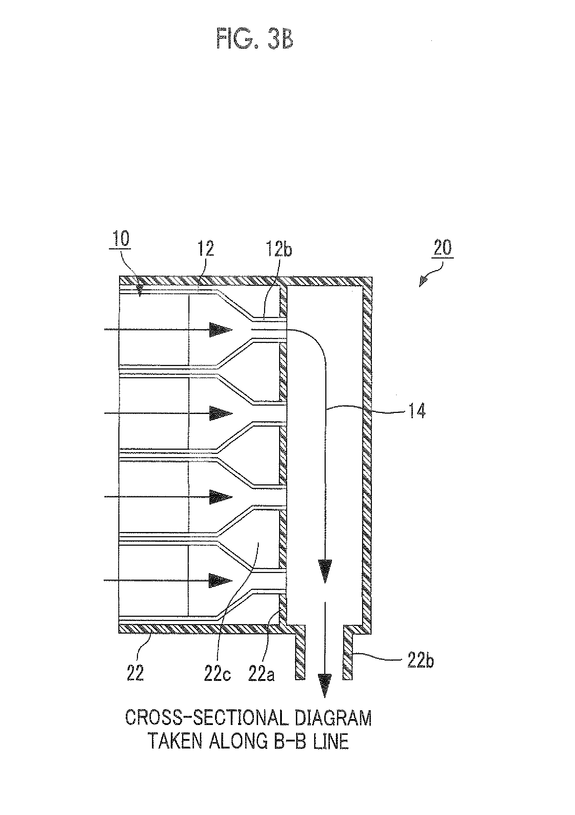

Fig. 3 (a) is a front elevational diagram schematically illustrating a receiver array making up the solar thermal power generation device related to this embodiment of the invention, and Fig. 3(b) is a cross-sectional diagram taken along a B-B line of the receiver array shown in Fig. 3(a).

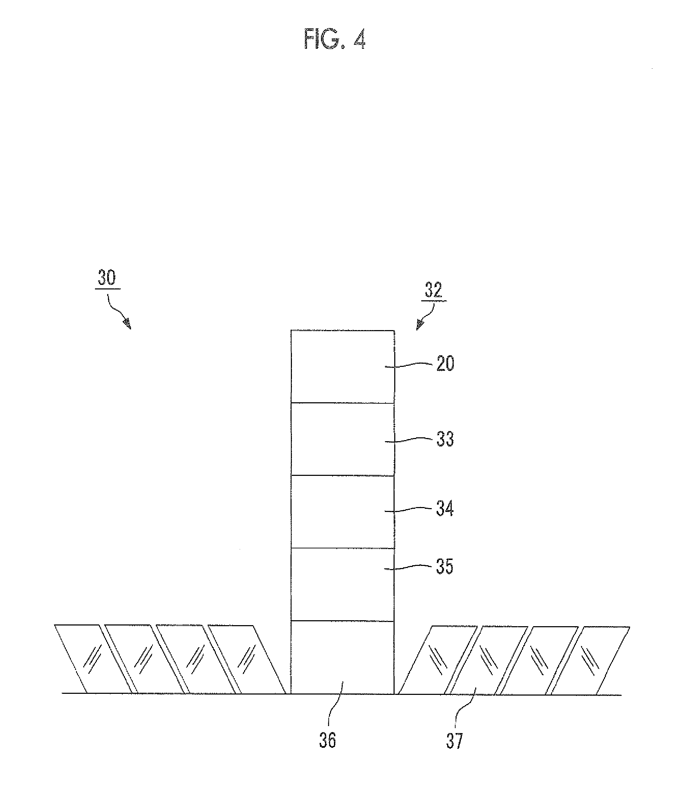

Fig. 4 an explanatory diagram schematically illustrating a solar thermal power generation device related to this embodiment of the invention.

In the receiver array 20 shown in Figs. 3(a) and 3(b), a plurality of heat collection receivers 10 are disposed in a box-type frame 22 in which a solar light irradiation surface is opened in a state in which a surface, which is irradiated with the solar light 18, of the heat absorption body 11 is arranged to face the front side.

That is, a heat medium outlet 12b of the support body 12 making up the heat collection receiver 10 is coupled to the bottom portion 22a of the frame 22, and the bottom portion 22a becomes a closed space 22c excluding a portion connected to the tube 22b. Therefore, the heat medium 14 such as the air passes through the flow path 13b formed in the honeycomb unit 13 and is heated by the heat absorption body 11. Then, the heat medium 14 passes through the heat medium outlet 12b of the support body 12 and is collected at the bottom portion 22a of the frame 22, and is guided to a steam generator 33, to be described later, through the tube 22b.

In practice, the tube 22b, a container that is coupled to the tube 22b, or the like is coupled to a device such as an exhaust pump that sucks the heat medium 14. Therefore, when the exhaust pump or the like is made to operate, the heat medium 14 such as the air around the heat collection receiver 10 passes through the flow path 13b formed in the honeycomb unit 13, and the heat accumulated in the heat absorption body 11 may be transferred to the heat medium 14 such as the air.

As shown in Figs. 3 (a) and 3 (b), the heat medium 14 such as the air around the heat collection receiver 10 is intended to be guided to the flow path 13b of the honeycomb unit 13. However, the bottom portion 22a of the frame 22 may be configured as a double structure having two chambers. In this case, the heat medium 14 such as the air does not suddenly enter the flow path 13b formed in the honeycomb unit 13, enters one chamber of the two chambers, and enters a space 22c present between the plurality of heat collection receiver 10. Subsequently, the heat medium 14 is blown out from the gap formed between heat collection portions 12a, and immediately enters the flow path 13b formed in the honeycomb unit 13 of the heat collection receiver 10.

When being configured as described above, since the heat medium 14 first performs heat exchange with the support body 12 of which temperature rises, the heat efficiency further increases.

In the solar thermal power generation device 30 of the invention, the receiver array 20 is disposed at the highest position of a central tower 32. A steam generator 33, a heat accumulator 34, a steam turbine 35, and a cooler 36 are sequentially disposed under the receiver array 20. In addition, a plurality of heliostats 37 are disposed around the central tower 32, but these heliostats 37 are set in such a manner that a reflection angle and a rotation direction with a perpendicular direction made as an axis may be freely controlled. Accordingly, the solar thermal power generation device 30 is automatically controlled in such a manner that ever-changing solar light 18 is reflected by the heliostats 37 and is collected by the receiver array 20 of the central tower 32.

The steam generator 33 is a unit that generates steam to cause the steam turbine 35 to operate. In the steam generator 33, the heat medium 14, which is heated by the heat absorption body 11 of the receiver array 20, passes through the gas tube 22b and is guided to the pipe of the steam generator 33 (boiler). In this pipe, heat exchange between water and the heat medium 14 occurs, and heated water generates water vapor.

The generated water vapor is introduced to the steam turbine 35 and operates the steam turbine 35 to rotate, and due to this rotation of the steam turbine 35, a power generator operates and thus electricity is generated.

The heat accumulator 34 is a unit that temporarily accumulates the heat that is obtained by the heat medium 14, and sand is used as a heat accumulation member. In this heat accumulator 34, a heat accumulation pipe (not shown), which is connected to the tube 22b, is laid in the sand, and the heat medium 14 that is heated by the heat absorption body 11 passes through the heat accumulation pipe, whereby heat is supplied to the sand that is a heat accumulation material. The heat accumulation material has large heat capacity, and thus the heat accumulation material may absorb a large amount of heat and accumulate the absorbed heat. In addition, the heat accumulation material that is accommodated in the heat accumulator 34 is not limited to the above-described sand, and an inorganic material having large heat capacity other than the sand may be used, and various kinds of salts or the like may be used.

In the sand of the heat accumulator 34, a steam generation pipe (not shown), that is different from the heat accumulation pipe, is laid in the sand, and thus during a time such as nighttime at which the solar light 18 cannot be used, the heat medium 14 that is not heated is made to flow through the steam generation pipe, and thus the heat medium 14 is heated by the sand that is the heat accumulation material of which the temperature rises. The heat accumulation pipe may also serve as the steam generation pipe.

The heat medium 14 that is heated enters the steam generator 33 and generates water vapor. Accordingly, as described, the steam turbine 35 operates and electricity is generated.

The water vapor that passes through the steam turbine 35 is guided to the cooler 36, is cooled down by the cooler 36, and becomes water. After a predetermined treatment, this water is returned to the steam generator 33.
In regard to the cooler 36, it is preferable that the heat medium 14, which is cooled after passing through the steam generator 33, be configured to pass through a cooling tube (not shown) of the cooler 36. When passing through the cooling tube, the heat medium 14 is heated, and thus the heat that is absorbed by the heat collection receiver 10 may be effectively used.

In addition, as described above, in a case where the pipe is configured in such a manner that the heat medium 14 that collects the heat which enters the space 22c that is formed between the plurality of heat collection receivers 10 of the receiver array 20, the heat of the support body 12 of the heat collection receiver 10 may be effectively used.

Hereinafter, operation effects of the solar thermal power generation device related to the third embodiment will be described.
(1) In the solar thermal power generation device of this embodiment, since the heat collection receiver related to the first embodiment is used, the solar light that is emitted may be effectively converted into heat, and thus power generation may be effectively performed.

(2) In the solar thermal power generation device of this embodiment, since the receiver array is provided with the plurality of heat collection receivers, in the solar thermal power generation device, a large amount of solar heat may be used, and thus a large amount of electricity may be generated.

(3) In the solar thermal power generation device of this embodiment, since the heat accumulator is used and the heat that is generated by the solar light may be stored in the heat accumulator, power generation may be performed even at nighttime, on a rainy day, or the like at which the solar light may not be used.

As described above, the solar thermal power generation device of the invention using the heat collection receiver related to the first embodiment of the invention was described, but even when using the heat collection receiver related to the second embodiment of the invention, the same solar thermal power generation device may be realized.

### Reference Signs List

- 10:: Heat collection receiver
- 11:: Heat absorption body
- 12:: Support body
- 12a:: Heat collection portion
- 12b:: Heat medium outlet
- 13:: Honeycomb unit
- 13a:: Porous layer
- 13b:: Flow path
- 14:: Heat medium
- 15:: Silicon
- 16:: Porous silicon carbide
- 17:: Heat insulation material
- 18:: Solar light
- 20:: Receiver array
- 22:: Frame
- 22a:: Bottom portion
- 22b:: Tube
- 22c:: Space
- 32:: Central tower
- 30:: Solar thermal power generation device
- 33:: Steam generator
- 34:: Heat accumulator
- 35:: Steam turbine
- 36:: Cooler
- 37:: Heliostat

## Claims

1. A heat collection receiver that is used in a solar thermal power generation device, the heat collection receiver comprising:
a heat absorption body that includes one or a plurality of honeycomb units in which a plurality of flow paths through which a heat medium passes are provided in parallel with each other; and
a support body which accommodates and supports the heat absorption body and through which the heat medium flows,
wherein the honeycomb unit includes porous silicon carbide, and silicon that fills pores in the porous silicon carbide,
in regard to a surface that is irradiated with solar light, a surface region in a predetermined depth from the surface is formed from a porous layer, and pores of the porous layer are not filled with the silicon.

2. The heat collection receiver according to Claim 1, wherein the honeycomb unit further includes porous carbon, and
the surface region of the honeycomb unit is formed from a porous carbon layer.

3. The heat collection receiver according to Claim 1 or 2,
wherein the surface region of the honeycomb unit has a depth of 500 nm or more from the surface.

4. The heat collection receiver according to any one of Claims 1 to 3,
wherein flow paths of 31.0 to 93.0 per cm² are formed in the honeycomb unit, a thickness of a wall portion between the flow paths in the honeycomb unit is 0.1 to 0.5 mm, a porosity of the porous silicon carbide is 35 to 60%, and an average pore size is 5 to 30 µm.

5. The heat collection receiver according to any one of Claims 1 to 4,
wherein a heat insulation material is interposed between the heat absorption body and the support body.

6. The heat collection receiver according to any one of Claims 1 to 5,
wherein the heat absorption body is configured in such a manner that the plurality of honeycomb units are bonded to each other through an adhesive layer.

7. The heat collection receiver according to Claim 6, wherein the heat absorption body is configured in such a manner that the plurality of honeycomb units are bonded to each other through a silicon layer that is formed on a side surface.

8. A solar thermal power generation device in which the heat collection receiver according to any one of Claims 1 to 7 is used.
